# EUROPÄISCHE PATENTSCHRIFT

(11) **EP 3 428 356 B1**
(45) Veröffentlichungstag und Bekanntmachung des Hinweises auf die Patenterteilung: **22.02.2023**
(21) Anmeldenummer: 18176592.6
(22) Anmeldetag: 07.06.2018
(51) Int. Cl.: E04B 1/48, F16B 5/02, F16B 43/00, E04B 1/41, E04B 1/04

(54) **VORRICHTUNG UND VERFAHREN ZUR VERBINDUNG VON ZWEI BAUTEILEN SOWIE EIN BAUELEMENT ALS TEIL DER VERBINDUNG**
DEVICE AND METHOD FOR CONNECTING TWO COMPONENTS TOGETHER AND ASSEMBLY AS PART OF THE JOINT
DISPOSITIF ET PROCÉDÉ DE RACCORDEMENT DE DEUX COMPOSANTS AINSI QU'UN COMPOSANT EN TANT QUE PARTIE DU RACCORDEMENT

(30) Priorität: 12.07.2017 CH 9102017
(43) Veröffentlichungstag der Anmeldung: 16.01.2019
(73) Patentinhaber: Pakon AG, 8867 Niederurnen (CH)
(72) Erfinder:
(74) Vertreter: Rentsch Partner AG

(56) Entgegenhaltungen:
- EP-A1- 3 214 235
- WO-A1-2017/013340
- CH-A- 343 181
- DE-A1- 2 219 185
- FR-A1- 2 744 501
- US-A1- 2014 157 699

## Beschreibung

### TECHNISCHES GEBIET

Die Erfindung betrifft eine Vorrichtung zur Verbindung von zwei Bauteilen, in einer gewünschten relativen Ausrichtung. Ein Bauelement für die erfindungsgemässe Vorrichtung, wobei das Bauelement als ein Teil der Verbindung von zwei Bauteilen vorgesehen ist. Die vorliegende Erfindung betrifft ferner ein Verfahren zur Verbindung von zwei Bauteilen mittels einer solchen Vorrichtung in einer bestimmten relativen Ausrichtung.

### STAND DER TECHNIK

Aus dem Stand der Technik sind verschiedene Lastverbinder zur Verbindung von Fertigteilen bekannt. Sie bestehen in der Regel aus einem ersten und einem zweiten Verbindungselement, wobei diese Verbindungselemente in Oberflächennähe der zur Verbindung vorgesehenen Bauteile angeordnet sind. Dabei handelt es sich beispielsweise um korrespondierende Haken, wobei ein erster Haken an einer Stirnseite einer ersten Wand und ein zweiter Haken an einer Stirnseite einer zweiten Wand oberflächennah befestigt sind. Durch das Einhängen der Haken können die Wände relativ rasch miteinander verbunden werden, sofern die beiden Wände, gegenüberliegend und nicht versetzt oder in einem Winkel schräg zueinander angeordnet sind. Die Toleranz gegenüber solchen "Fehlstellungen" und die Möglichkeit diese auszugleichen, sodass die beiden Stirnseiten der Wände exakt aufeinander ausgerichtet sind, ist mit den Haken nur im Bereich weniger Millimeter möglich. Schrägstellungen können gar nicht behoben werden.

Die US 2014/157699 A1 offenbart ein Nivelliersystem für eine Fassadenhalterung. Das Nivelliersystem umfasst eine Wandhalterung, in der eine Vielzahl von Aufnahmeöffnungen für Gewindeeinsteller angeordnet sind. Die US 2014/157699 A1 schlägt vor, eine Plattenhalterung auf einer Vielzahl von Befestigungsschrauben zu positionieren, die innerhalb eines Einbettungskanals angeordnet sind, der durch eine in einer Betonplatte eingeschlossene Einbettung definiert ist. Es kann gewählt werden, ob die Plattenhalterung eben und in einer gewünschten Höhe von der Oberfläche der Betonplatte positioniert ist. Wenn die Wandhalterung nicht waagerecht und/oder nicht auf der gewünschten Höhe ist, kann der Benutzer eine oder mehrere der Einsteller weiter in oder weiter aus den jeweiligen Aufnahmeöffnung herausdrehen, bis die Wandhalterung waagerecht und in der gewünschten Höhe steht.

Die CH343181 betrifft eine Verbindung mehrerer Bauteile mittels Bolzens und mindestens eines Einsatzstückes, welches Einsatzstück zwecks Aufnahme des Verbindungsbolzens eine axiale Ausnehmung aufweist. Die CH343181 offenbart, dass das Einsatzstück mit einem zylindrischen Teil mindestens den einen Bauteil durchdringt und sich mit einem randseitigen Ansatz gegen dessen eine Fläche legt.

Die US2018/0216644 offenbart eine Baugruppe mit einem ersten Teil aus Verbundwerkstoff und einem zweiten Teil, welche von einem Befestigungssystem mit einem Befestigungselement umfassend einen Kopf und einen Schaft gehalten werden. Das Befestigungssystem beinhaltet weiterhin eine Buchse, wobei die Buchse einen Bund umfasst, der eine Innenfläche und eine Außenfläche von konischer Form aufweist. Der Kopf des Befestigungselements liegt an der Innenseite eines Kragens an, während die Außenseite des Kragens an einem im ersten Teil ausgebildeten Senker anliegt.

Die DE2219185 offenbart eine Verdollung von übereinander angeordneten Fassadenplatten zur Verkleidung von Gebäudewänden. Beim Aufhängen von Fassadenplatten ergeben sich durch Ungenauigkeiten an der senkrechten Frontseite der Gebäudewand an den darauf abgestützten Fassadenplatten entsprechende Unterschiede bei den übereinander und nebeneinander befindlichen Ecken der Fassadenplatten. In diesem Falle passen Verdollungslöcher in den benachbarten Ober- und Unterrandseiten der Fassadenplatten nicht genau aufeinander. Die DE2219185 schlägt einen zweiteiligen Zapfen vor dessen übereinander angeordneten Teile mit ihren Längsmittelachsen exzentrisch gegeneinander versetzt sind. Die Zapfen sind jeweils in einer eigenen Führung in einer der Fassadenplatten drehbeweglich und feststellbar.

### DARSTELLUNG DER ERFINDUNG

Die Erfindung stellt sich die Aufgabe, eine Vorrichtung und ein Bauelement für eine solche Vorrichtung zu schaffen, wobei mindestens einen Nachteil bekannter Vorrichtungen und Bauelemente vermieden werden soll. Ferner stellt sich die Erfindung die Aufgabe, ein Verfahren zur Ausrichtung von zwei Bauteilen aufeinander mit einer solchen Vorrichtung sowie ein damit versehenes Bauwerk mit mindestens zwei Bauteilen anzugeben, die damit aufeinander ausgerichtet sind.

Hinsichtlich der Vorrichtung wird diese Aufgabe gelöst durch eine Vorrichtung mit den Merkmalen des Patentanspruchs 1. Bevorzugte Ausführungsformen sind in den abhängigen Patentansprüchen wiedergegeben.

Die erfindungsgemässe Vorrichtung zur Verbindung von zwei Bauteilen, in einer gewünschten relativen Ausrichtung, umfasst eine erste Lochplatte, eine erste Drehscheibe und eine Schraube, wobei die erste Lochplatte in einem ersten der beiden Bauteile angrenzend an eine Oberfläche dieses Bauteils verankerbar und mit einem Loch versehen ist, wobei die erste Drehscheibe in dem Loch der ersten Lochplatte drehbar und gegen aussen gehalten ist. Die erste Drehscheibe ist mit einer Öffnung versehen, wobei die Schraube zum Durchstecken durch die Öffnung bemessen ist und wobei weiter die Öffnung als Langloch ausgebildet sein kann und die Schraube entlang diesem verschiebbar ist, wobei
die erste Drehscheibe gegenüber der ersten Lochplatte und/oder die Schraube gegenüber der ersten Drehscheibe mittels korrespondierender Kugelbundflächen um bis zu 10° verschwenkbar ist.
   oder
die erste Drehscheibe im Loch der ersten Lochplatte und/oder die Schraube gegenüber der ersten Drehscheibe mit Spiel gehalten und um bis zu 10° verkippbar ist.

Durch Verschieben der Schraube -in der Öffnung der Drehscheibe und/oder durch Drehen/Verschwenken und Verkippen der Drehscheibe im Loch der Lochplatte kann die Schraube im Bereich der Fläche der Drehscheibe in unterschiedliche Positionen gebracht und dadurch Fehlstellungen wie vorstehend erwähnt in einfachster Weise effektiv ausgeglichen werden. Der mögliche Verstellbereich kann durch geeignete Bemessung der Grösse der Drehscheibe und der Schwenk-, und Kippwinkel an die bautechnischen Erfordernisse angepasst werden.

In einer ersten Ausführungsform der Erfindung weist die Vorrichtung eine zweite Lochplatte sowie eine Mutter auf. Die zweite Lochplatte ist in dem zweiten der beiden Bauteile angrenzend an eine Oberfläche dieses zweiten Bauteils verankerbar. Ferner ist die zweite Lochplatte mit einem Loch zum Durchstecken der Schraube versehen. Die erste und die zweite Lochplatte sind mittels der Schraube und der Mutter miteinander verbindbar.

In einer weiteren Ausführungsform ist im Loch der zweiten Lochplatte eine zweite Drehscheibe drehbar und gegen aussen gehalten vorgesehen. Die zweite Drehscheibe ist ebenfalls mit einer Öffnung versehen. Die Schraube ist zum Durchstecken auch durch die Öffnung bemessen. Beispielsweise handelt es sich bei der Öffnung um ein Langloch, wobei die Schraube entlang diesem Langloch verschiebbar ist.

In einer bevorzugten Ausführungsform sind die erste und/oder die zweite Drehscheibe im Loch der ersten und/oder der zweiten Lochplatte durch eine konische Ausbildung des Lochs und/oder der Drehscheibe formschlüssig gehalten. Durch diese Ausbildung können sie mit hohen Anzugskräften der Schraube und beispielsweise der erwähnten Mutter belastet werden.

In einer Ausführungsform sind die erste und/oder die zweite Drehscheibe im Loch der ersten und/oder der zweiten Lochplatte und/oder die Schraube gegenüber der ersten und/oder der zweiten Drehscheibe mit Spiel gehalten. Aufgrund dieses Spiels sind die Drehscheiben gegenüber den Lochplatten und/oder die Scheibe gegenüber den Drehscheiben und um bis zu 10°, vorzugsweise bis zu 2°- 4°, verkippbar. In einer weiteren Ausführungsform sind die erste und/oder die zweite Drehscheibe gegenüber der ersten und/oder der zweiten Lochplatte und/oder die Schraube gegenüber der ersten und/oder der zweiten Drehscheibe mittels korrespondierender Kugelbundflächen um bis zu 10°, vorzugsweise bis zu 2°-4°, verschwenkbar.

Auf diese Weisen können auch Bauteile zu einander ausgerichtet werden, die schräg, d.h. nicht parallel zu einander angeordnet sind.

In einer Ausführungsform ist an der einer Innenseite der ersten und/oder der zweiten Lochplatte, im Bereich des Lochs ein mit der Innenseite verbundener Hohlkörper mit einer Öffnung vorgesehen, vorzugsweise weist diese Öffnung einen abnehmbaren Deckel auf.

In einer Ausführungsform sind an der Innenseite der ersten und/oder der zweiten Lochplatte Mittel vorgesehen sind, vorzugsweise Armier-Eisen, welche dazu eingerichtet sind, die erste und/oder die zweite Lochplatte im Bauteil zu verankern.

In einer Ausführungsform ist an den Aussenseiten der ersten und zweiten Lochplatte, eine strukturierte, vorzugsweise eine Oberfläche mit Zähnen vorgesehen. Bei der Verbindung des ersten Bauteils mit dem zweiten Bauteil, greifen die beiden Strukturen formschlüssig ineinander.

In einer weiteren Ausführungsform weisen das Loch in der ersten und/oder der zweiten Lochplatte und die erste und/oder die zweite Drehscheibe eine Verzahnung auf, wobei zwischen der Verzahnung des Lochs in der Lochplatte und der Verzahnung der Drehscheibe ein Formschluss gebildet wird.

In einer zweiten Ausführungsform der Erfindung weist die Vorrichtung im zweiten Bauteil, anstelle der zweiten Lochplatte eine Gewindehülseauf, welche angrenzend an die Oberfläche des zweiten Bauteils verankerbar ist. Die Schraube ist in diese Gewindehülse einschraubbar. Die beiden Bauteile können auf diese Weise miteinander verbunden werden.

In einer dritten Ausführungsform der Erfindung weist die Vorrichtung anstelle der Lochplatte eine Ankerschiene auf, wobei die Ankerschiene in dem zweiten Bauteil angrenzend an einer Oberfläche dieses zweiten Bauteils verankerbar ist und die Schraube, vorzugsweise eine Hammerkopfschraube, mit ihrem Kopf in die Ankerschiene einlegbar ist.

In allen vorgängig beschriebenen Ausführungsformen der erfindungsgemässen Vorrichtung kann zwischen dem ersten und dem zweiten Bauteil ein Abstandshalter vorgesehenen sein.

Ein Bauelement, welches in der erfindungsgemässen Vorrichtung als ein Teil zur Verbindung von zwei Bauteilen eingesetzt wird, umfasst in einer bevorzugten Ausführungsform eine Lochplatte und eine Drehscheibe, wobei die Lochplatte in einem ersten der beiden Bauteile angrenzend an eine Oberfläche dieses Bauteils verankerbar und mit einem Loch versehen ist. Die Drehscheibe ist im Loch der Lochplatte drehbar und gegen aussen gehalten. Die erste Drehscheibe ist mit einer Öffnung versehen, wobei die Schraube zum Durchstecken durch die Öffnung bemessen ist, und wobei weiter die Öffnung ein Langloch ist und wobei die Schraube entlang diesem verschiebbar ist, wobei
die erste Drehscheibe (12, 12', 9) gegenüber der ersten Lochplatte (1, 1', 10) und/oder die Schraube (2, 2', 7) gegenüber der ersten Drehscheibe (12, 12', 9) mittels korrespondierender Kugelbundflächen um bis zu 10° verschwenkbar ist, oder
die erste Drehscheibe (12, 12', 9) im Loch (11, 11', 13) der ersten Lochplatte (1, 1', 10) und/oder die Schraube (2, 2', 7) gegenüber der ersten Drehscheibe (12, 12', 9) mit Spiel gehalten und um bis zu 10° verkippbar ist.

Ein Bauwerk mit zwei mittels der erfindungsgemässen Vorrichtung in einer gewünschten relativen Ausrichtung miteinander verbundenen Bauteilen, umfasst die erste Lochplatte die in einem der beiden Bauteile angrenzend an eine Oberfläche dieses Bauteils verankert ist. Die Schraube ist durch das Langloch in der ersten Drehscheibe durchgesteckt und in eine, im anderen Bauteil verankerte Gewindehülse eingeschraubt. Alternativ ist diese durch eine Mutter in einem Loch einer zweiten Lochplatte gesichert, welche angrenzend an eine Oberfläche des anderen Bauteils verankert ist.

In einer Ausführungsvariante eines Verfahren zur Verbindung von zwei Bauteilen mittels der erfindungsgemässen Vorrichtung in einer gewünschten relativen Ausrichtung wird die erste Lochplatte der genannten Vorrichtung in einem der beiden Bauteile angrenzend an eine Oberfläche dieses Bauteils verankert und in dem anderen Bauteil eine Gewindehülse oder eine zweite Lochplatte angrenzend an eine Oberfläche dieses Bauteils verankert. Im Anschluss werden folgende Schritte vorgenommen:
- Ausrichten der beiden Bauteile in der gewünschten relativen Ausrichtung aufeinander,
- Drehen und/oder Verkippen und/oder Verschwenken der Drehscheibe in einer der beiden oder in beiden Lochplatten, bis die Öffnung in der Drehscheibe mit der Gewindehülse oder der Ankerschiene oder einem Loch in einer der beiden Lochplatte fluchtet,
- Durchstecken der Schraube durch die Drehscheibe angeordnet in der ersten oder der zweiten Lochplatte und Einschrauben der Schraube in die Gewindehülse oder Einlegen eines Kopfes einer Hammerkopfschraube in die Ankerschiene oder Durchstecken der Schraube durch das Loch in der Lochplatte und Sichern der Schraube mit einer Mutter in einem Loch der Lochplatte.

Die erfindungsgemässe Vorrichtung kommt bei der Verbindung von zwei und auch mehr Bauteilen zum Einsatz, beispielsweise bei der Verbindung von Betonteilen oder der Verbindung von Stahlprofile/-platten mit Betonteilen an den zur Verbindung vorgesehen Bauteilen kann mehr als eine erfindungsgemässe Vorrichtung verankert sein. Mit der erfindungsgemässen Vorrichtung ist es möglich, verschiedene Bauteile, beispielsweise Wände, Decken und Stützen miteinander zu verbinden. Durch die erfindungsgemässe Vorrichtung wird die Montagezeit reduziert. Insbesondere ist für die Verbindung von zwei Bauteilen, beispielsweise aus Beton kein zusätzlicher Beton oder Mörtel erforderlich, dessen Aushärtung vor weiteren Arbeiten erst abgewartet werden müsste.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:

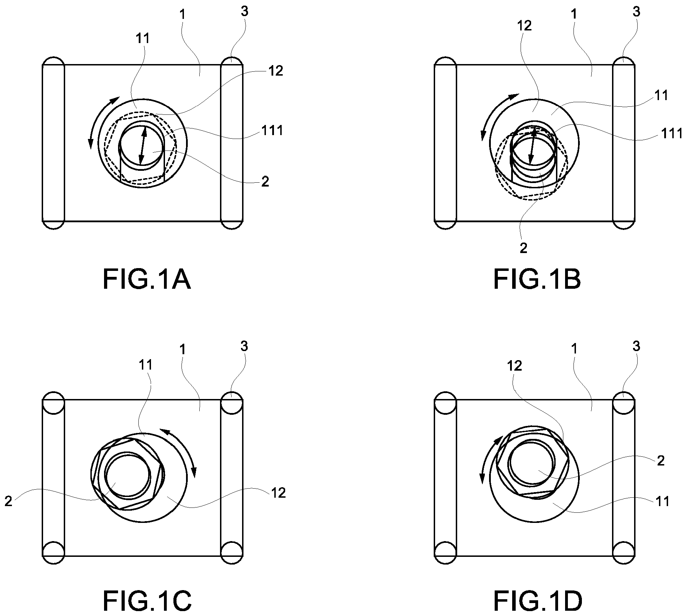

- Fig. 1 unter a), b.): eine Darstellung des Grundprinzips der erfindungsgemässen Vorrichtung mit einer längsseitigen Verschiebung der Schraube von einer ersten in eine zweite Position,
- Fig. 1 unter c), d.): eine Darstellung des Grundprinzips der erfindungsgemässen Vorrichtung mit der Drehscheibe in einer ersten sowie einer zweiten Drehposition,
- Fig. 2: eine erste Ausführungsform der erfindungsgemässe Vorrichtung angeordnet in Bauteilen A, B, in einer Ansicht von Oben, wobei die Bauteile noch nicht miteinander verbunden sind,
- Fig. 3: die Ausführungsform dargestellt in Fig. 2 in einer Seitenansicht,
- Fig. 4: eine zweite Ausführungsform der erfindungsgemässen Vorrichtung, in einer Seitenansicht
- Fig. 5: die Ausführungsform aus Fig. 4 in einer Ansicht von schräg hinten, wobei nur die beiden Lochplatten, die Armier-Eisen und die zweite Drehscheibe dargestellt sind.

### WEGE ZUR AUSFÜHRUNG DER ERFINDUNG

Die Darstellungen in **Fig. 1a****.) - d.)** zeigen, vereinfacht gesagt, das Grundprinzip der erfindungsgemässen Vorrichtung zur Verbindung von zwei Bauteilen und die Möglichkeit diese beiden Bauteilen aufeinander auszurichten. In allen Figuren (1a.) -d.)) ist eine Lochplatte 1 mit einem Loch 11 und eine in diesem Loch 11 eingesetzte Drehscheibe 1 2 gezeigt. Die Drehscheibe 12 weist ein Langloch 111 auf. In der gezeigten Darstellung ist das Langloch zu einer Seite hin offen und nimmt die Schraube 2 auf. In Fig. 1 a.) und 1b.) ist eine Aussenseite der Lochplatte 1 gezeigt. Unter der Aussenseite der Lochplatte 1 ist jene Seite zu verstehen, die sichtbar ist wenn die erfindungsgemässe Vorrichtung in einem der beiden Bauteile (Bauteil in dieser Darstellung nicht sichtbar) verankert ist. Als Verankerung, beispielsweise in einer Betonwand dienen die teilweise sichtbaren Armier Eisen 3. In Fig. 1a.) und b.) sichtbar ist eine Unterseite des Schraubenkörpers der Schraube 2. In diesen beiden Figuren ist die Verschiebbarkeit der Schraube 2 entlang des Langlochs 111 von einer ersten Position in eine zweite Position dargestellt.

In Fig. 1c.) und 1d.) ist eine Innenseite der Lochplatte 1 gezeigt. Als Innenseite ist jene Seite zu verstehen, welche zum Bauteil hin orientiert ist wenn die erfindungsgemässe Vorrichtung in diesem verankert ist. In dieser Ansicht ist der Kopf der Schraube 2 sichtbar. Das Langloch 111 angeordnet in der Drehscheibe 12 wird von der Schraube 2 durchdrungen. Die Drehscheibe 12 ist im Loch 11 der Lochplatte 1 drehbar. Die Schraube 2 ist daher von einer ersten Drehposition in eine zweite Drehposition bewegbar. In der gezeigten Darstellung kann die Drehscheibe 12 um 360° im Loch 11 der Lochplatte 1 gedreht werden.

Mit der erfindungsgemässen Vorrichtung ist es möglich, durch Verschieben der Schraube im Langloch und/oder Drehen der Drehscheibe 12 in der Lochplatte 1 das Langloch 111 in der Drehscheibe 12 fluchtend zu einer Gewindehülse oder einem Loch in einer zweite Lochplatte, welche in einem zweiten Bauteil verankert ist, auszurichten.

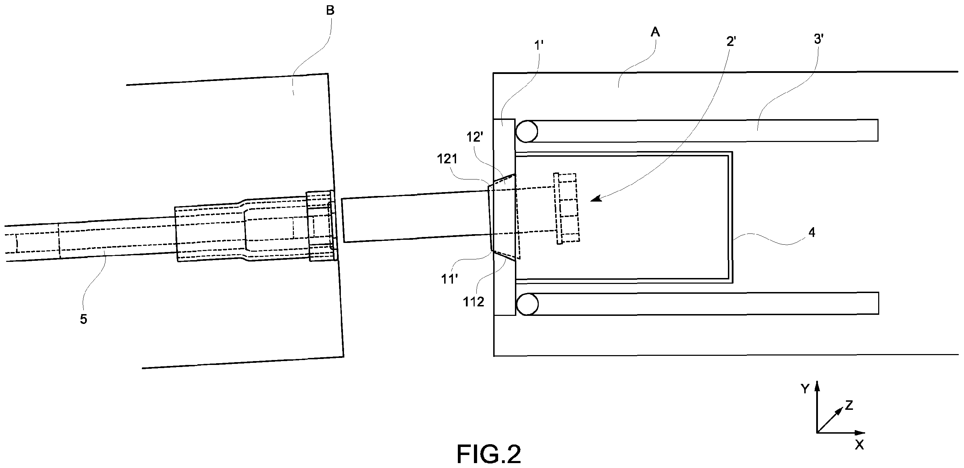

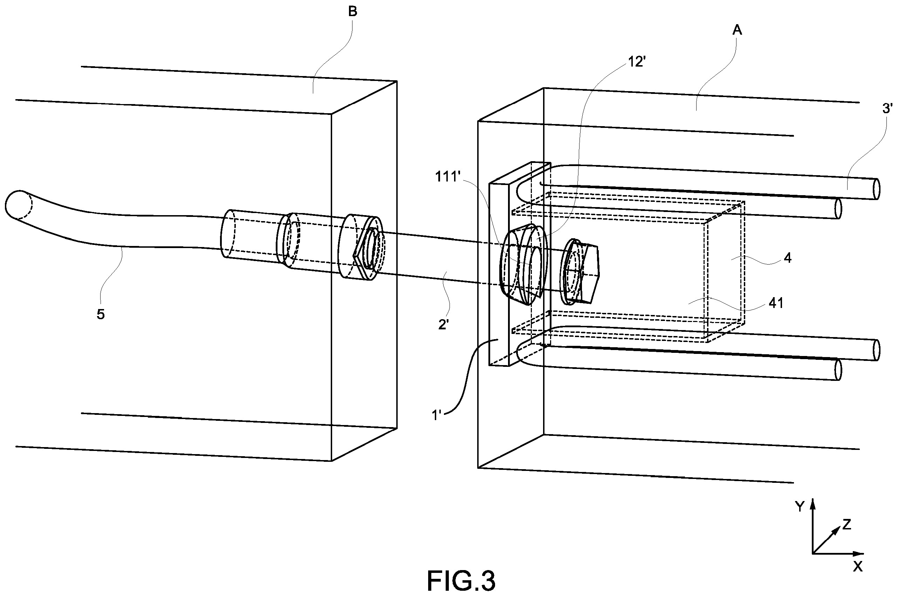

In **Fig. 2** und **Fig.3** ist eine erste Ausführungsform der erfindungsgemässen Vorrichtung angeordnet in Bauteil A und B dargestellt. Bei den Bauteilen A, B handelt es sich beispielsweise um Betonwände.

In Fig. 2 ist die Lochplatte 1' angrenzend an einer Oberfläche des Bauteils A verankert. Im Loch 11' der Lochplatte 1' ist die Drehscheibe 12' angeordnet. Durch das Langloch 111' der Drehscheibe 12' verläuft die Schraube 2'. Die die Drehscheibe 12' umlaufende Seitenwand 121 und die Seitenwand 112 des Lochs 11' weisen eine konische Form auf. Die Drehscheibe 12' wird im Loch 11' gehalten und kann weder zur Aussen-, noch zur Innenseite der Lochplatte herausfallen. Auf der Innenseite der Lochplatte 1' ist ein mit der Innenseite verbundener Hohlkörper 4 vorgesehen. Der Hohlkörper, beispielsweise eine Kunststoffbox weist eine Öffnung auf. Die Öffnung ist mit einem Deckel versehen (Deckel in Fig. 2 nicht sichtbar). Der Deckel ist von Hand abnehmbar und die Öffnung im Hohlkörper 4 in ihrer Grösse derart beschaffen, dass mit einer Hand ein Zugriff in den Hohlkörper möglich ist. Ist die Lochplatte 1' im Bauteil A verankert und handelt es sich dabei beispielsweise um ein Betonwand, so bietet der Hohlkörper die Möglichkeit Teile, z.B. die Schraube 2' welche für das Verbinden des Bauteils A mit dem Bauteil B benötigt wird, zu deponieren. Erfolgt die Verbindung und Ausrichtung der beiden Bauteilen, beispielsweise beim Endkunden auf der Baustelle, so wird der Deckel der Kunststoffbox entfernt, die Schraube auf ein Gewinde 5 angeordnet im Bauteil B ausgerichtet (vgl. hierzu Beschreibung zur Figur 1a.) bis d.)) und durch anschliessendes Verschrauben die beiden Bauteile miteinander verbunden.

**Fig. 3** zeigt eine Seitenansicht der Ausführungsform aus Fig. 2. In der Ansicht nach Fig. 3 besser ersichtlich ist die Schraube 2', die Drehscheibe 12' mit dem Langloch 111', welches zum Rand der Drehscheiben 12' hin, offen ausgebildet ist. Wie bereits zu Fig. 2 erläutert, ist auf der Innenseite der Lochplatte ein zu einer Seite hin offener Hohlraum 4, vorgesehen. Wenn die erfindungsgemässe Vorrichtung in das Bauteil A einbetoniert ist, hält die Öffnung 41 den Zugang zur Schraube 2' frei. Die Box ist von Hand oder mit einem entsprechenden Drehwerkzeug zugänglich. Die Schraube 2' wird in die Drehscheibe 12' eingesetzt und durchläuft das Langloch 111.

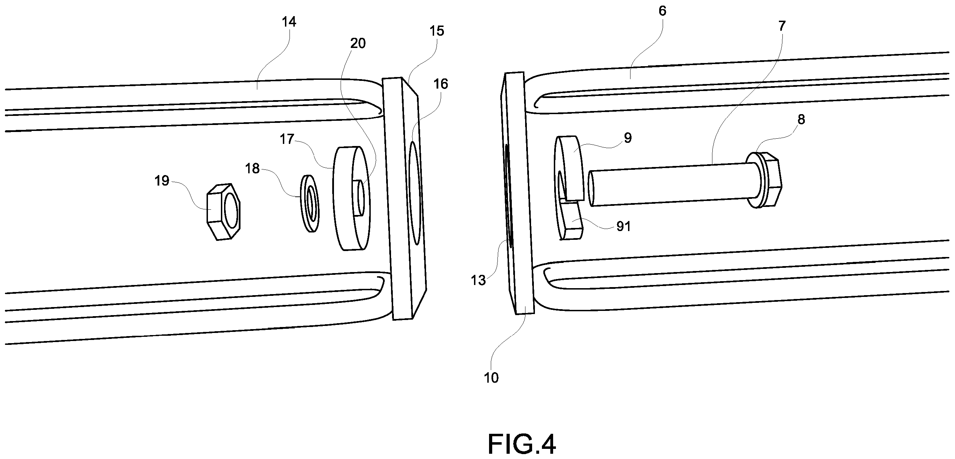

Wie in Fig. 2 ersichtlich, sind die beiden Bauteile A, B nicht exakt parallel oder fluchtend zueinander angeordnet sondern in der xz-Ebene gegeneinander verkippt. In dieser Ausrichtung könnten sie mit den bekannten Mitteln des Standes der Technik zumindest nicht ohne weiteres miteinander verbunden werden. Bei der Ausführungsform von Fig. 2 und Fig. 3 ist die Drehscheibe 12' und mit ihr die Schraube 2' jedoch kippbar im Loch 11' angeordnet. Durch diese Möglichkeit des Verkippens können die beiden Bauteile A, B, sofern das gewünscht ist, in der dargestellten, nicht parallelen Ausrichtung miteinander verbunden werden. Andererseits wäre eine Verbindung der beiden Bauteile A, B auch in paralleler Ausrichtung möglich, sofern die beiden Teile der erfindungsgemässen Vorrichtung unbeabsichtigt im Winkel nicht miteinander fluchten. Eine Möglichkeit diese Kippbarkeit zu erzielen ist, für ein gewisses Spiel der Drehscheibe 12' im Loch der 11' zu sorgen, indem beispielsweise die beiden Konen der konisch ausgebildeten Seitenwände 121 und 112 einen unterschiedlichen Konus Winkel aufweisen. Alternativ könnte die Drehscheibe und mit ihr die Schraube in der Lochplatte auch ohne Spiel schwenkbar durch korrespondierende Kugelbundflächen (nicht dargestellt) ausgebildet sein. **Fig. 4** zeigt eine Explosionsdarstellung einer zweiten Ausführungsform der erfindungsgemässen Vorrichtung in einer Seitenansicht (Bauteile nicht dargestellt). Jener Teil der erfindungsgemässen Vorrichtung welcher im ersten Bauteil verankert ist, umfasst eine erste Lochplatte 10 mit einem Loch 13. Im Loch 13 wird eine Drehscheibe 9 aufweisend ein Langloch 91 drehbar und nach aussen hin gehalten gelagert. Eine Schraube 7 durchstösst das Langloch 91 und kann in diesem entlang seiner Länge verschoben werden. In der Ausführungsform gemäss Fig. 4 ist das Langloch 91 zu einer Seite hin offen ausgebildet. Im Unterschied zur ersten erfindungsgemässen Vorrichtung ist im zweiten Bauteil keine Gewindehülse sondern eine zweite Lochplatte 15 mit einem Loch 16 vorgesehen.

In dargestellten Ausführungsform der Fig. 4 ist im Loch 16 ebenfalls eine Drehscheibe 17, drehbar und nach aussenhin gehalten, dargestellt. In einer bevorzugten Ausführungsform weist die Drehscheibe 17 ebenfalls ein Langloch 20 auf und ist baugleich zur Drehscheibe in der ersten Lochplatte ausgebildet. Für die fluchtende Ausrichtung der beiden Langlöcher kann in dieser Ausführungsform, sowohl an der ersten als auch an der zweiten Drehscheibe 17 gedreht und/oder verschoben bzw. diese verkippt werden. Ist dies erfolgt, durchläuft die Schraube 7 das erste und das zweite Langloch 91, 20 und wird im einer Mutter 19 in der zweiten Lochplatte 15 gesichert. Der Verstellbereich mögliche Verkippwinkel ist bei dieser Ausführungsform gegenüber der Ausführungsform von Fig. 2 und Fig. 3 verdoppelt. Optional ist zwischen zweiter Drehscheibe 17 und Mutter 19 eine Beilagscheibe 18 vorgesehen. Die zweite Lochplatte 15 ist ebenfalls mit Armier Eisen 14, 6 im zweiten Bauteil verankert. Vergleichbar mit der ersten Ausführungsform sind in einer bevorzugten Ausführungsform an den Innenseiten der Lochplatten 10, 15 Hohlkörper mit einer Öffnung vorgesehen, die bei der Montage der Bauteile einen Zugang zu den hierfür benötigten Teilen ermöglichen (in Fig.4 nicht dargestellt).

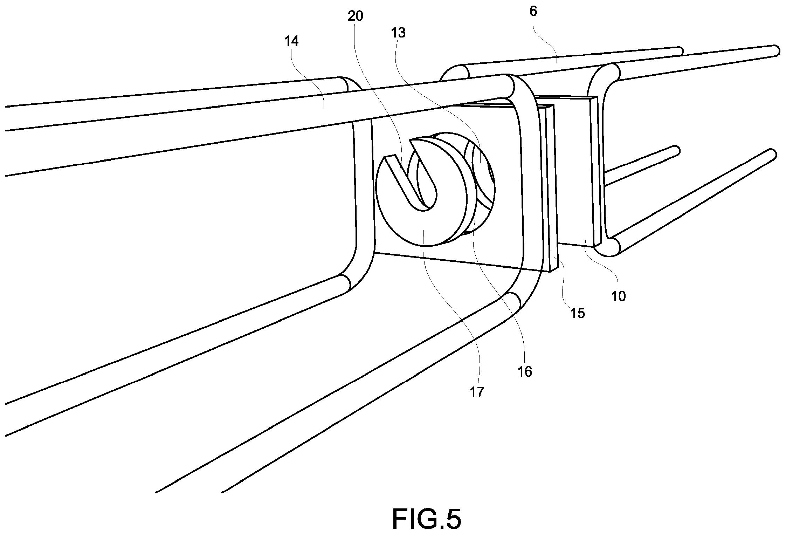

**Fig. 5** zeigt Teile der zweiten erfindungsgemässen Anordnung. Dargestellt ist die erste und die zweite Lochplatte 10, 15 mit dem ersten und dem zweiten Loch 13, 16. Im zweiten Loch 13 ist die Drehscheibe 17 mit einem Langloch 20, welches zu einer Seite hin offen ist, angeordnet. In einer bevorzugten Ausführungsform der zweiten erfindungsgemässen Anordnung sind in den Löchern der erst und zweiten Lochplatte 10, 15 baugleiche Drehscheiben vorgesehen. Die Seitenwände die diese Drehscheiben 17, 9 und die beiden Löcher umlaufen haben eine konische Form. Optional weisen die Konen einen unterschiedlichen Winkel auf, sodass die Drehscheiben in den beiden Löchern kippbar sind. Die erfindungsgemässe Vorrichtung gemäss Fig. 4 und Fig. 5 ermöglicht ein erstes und ein zweites Bauteil parallel in horizontaler bzw. vertikaler Richtung auszurichten. Dadurch, dass die Drehscheiben 17, 9 optional kippbar sind, können auch Ausrichtungen von schräg zueinander stehenden Bauteilen ausgeglichen werden.

Für die Schraube ist ein Durchmesser im Bereich von 8 mm - 54 mm geeignet. Darauf abgestimmt und im Hinblick auf die in der Praxis auftretenden Toleranzen kann die bzw. können die Drehscheibe/n einen Durchmesser im Bereich von 20 mm - 80 mm aufweisen. Der mögliche Kipp- bzw. Schwenkwinkel kann bis zu 10° betragen.

### BEZEICHNUNGSLISTE

- 1, 1', 10, 15: Lochplatte
- 11, 11', 13, 16: Loch
- 12, 12', 17, 9: Drehscheibe
- 14: Armier-Eisen
- 8, 18: Beilagscheibe
- 19: Mutter
- 111, 111', 91, 20: Langloch
- 2, 2', 7: Schraube
- 3, 3', 6, 14: Armier-Eisen
- 4: Hohlkörper
- 41: Öffnung
- A, B: Bauteile
- 5: Gewindehülse
- 121: Seitenwand Drehscheibe
- 112: Seitenwand Loch

## Patentansprüche

1. Vorrichtung zur Verbindung von zwei Bauteilen (A, B), in einer gewünschten relativen Ausrichtung, umfassend eine erste Lochplatte (1, 1', 10), eine erste Drehscheibe (12, 12', 9) und eine Schraube (2, 2', 7), wobei die erste Lochplatte (1, 1', 10) in einem ersten der beiden Bauteile (A, B) angrenzend an eine Oberfläche dieses Bauteils verankerbar und mit einem Loch (11, 11', 13) versehen ist, wobei die erste Drehscheibe (12, 12', 9) in dem Loch (11, 11', 13) der ersten Lochplatte (1, 1', 10) drehbar und gegen aussen gehalten ist, wobei die erste Drehscheibe (12, 12', 9) mit einer Öffnung (111, 111', 91) versehen ist, und wobei die Schraube (2, 2', 7) zum Durchstecken durch die Öffnung (111, 111', 91) bemessen ist,
- die Öffnung ein Langloch (111, 111', 91) ist und die Schraube (2, 2', 7) entlang diesem verschiebbar ist,
wobei
- die erste Drehscheibe (12, 12', 9) gegenüber der ersten Lochplatte (1, 1', 10) und/oder die Schraube (2, 2', 7) gegenüber der ersten Drehscheibe (12, 12', 9) mittels korrespondierender Kugelbundflächen um bis zu 10° verschwenkbar ist,
oder
- die erste Drehscheibe (12, 12', 9) im Loch (11, 11', 13) der ersten Lochplatte (1, 1', 10) und/oder die Schraube (2, 2', 7) gegenüber der ersten Drehscheibe (12, 12', 9) mit Spiel gehalten und um bis zu 10° verkippbar ist, sodass Bauteile zueinander ausrichtbar sind, die nicht parallel zu einander angeordnet sind.

2. Vorrichtung nach Anspruch 1, **dadurch gekennzeichnet, dass** die Vorrichtung eine zweite Lochplatte (15) sowie eine Mutter (19) umfasst, wobei die zweite Lochplatte (1, 1', 10, 15) in dem zweiten der beiden Bauteile (A, B) angrenzend an eine Oberfläche dieses zweiten Bauteils (A, B) verankerbar und mit einem Loch (16) zum Durchstecken der Schraube (2, 2', 7) versehen ist und wobei die erste und die zweite Lochplatte (1, 1', 10, 15) mittels der Schraube (2, 2', 7) und der Mutter (19) miteinander verbindbar sind.

3. Vorrichtung nach Anspruch 2, **dadurch gekennzeichnet, dass** im Loch (16) der zweiten Lochplatte (15) eine zweite Drehscheibe (17) drehbar und gegen aussen gehalten ist, wobei die zweite Drehscheibe (12, 12', 17, 9) mit einer Öffnung (20) versehen ist, wobei die Schraube (2, 2',7) zum Durchstecken auch durch die zweite Öffnung (20) bemessen ist, vorzugsweise die Öffnung ein Langloch (20) ist und wobei die Schraube (2, 2', 7) entlang diesem verschiebbar ist.

4. Vorrichtung gemäss Anspruch 1 oder 3, **dadurch gekennzeichnet, dass** die erste und/oder die zweite Drehscheibe (12, 12', 17, 9) im Loch (11, 11', 13, 16) der ersten und/oder der zweiten Lochplatte (1, 1', 10, 15) durch eine konische Ausbildung des Lochs (11, 11', 13, 16) und/oder der Drehscheibe (12, 12', 17, 9) formschlüssig gehalten ist.

5. Vorrichtung nach Anspruch 3, **dadurch gekennzeichnet, dass** die zweite Drehscheibe (17) im Loch (16) der zweiten Lochplatte (15) und/oder die Schraube (2, 2', 7) gegenüber der zweiten Drehscheibe (17) mit Spiel gehalten und um bis zu 10°, vorzugsweise bis zu 2°- 4°, verkippbar ist.

6. Vorrichtung nach Anspruch 3, **dadurch gekennzeichnet, dass** die zweite Drehscheibe (17) gegenüber der zweiten Lochplatte (15) und/oder die Schraube (2, 2', 7) gegenüber der zweiten Drehscheibe (17) mittels korrespondierender Kugelbundflächen um bis zu 10°, vorzugsweise bis zu 2°- 4°, verschwenkbar ist.

7. Vorrichtung nach einem der vorangegangenen Ansprüche, **dadurch gekennzeichnet, dass** an einer Innenseite der ersten und/oder der zweiten Lochplatte (1, 1', 10, 15) im Bereich des Lochs (11, 11', 13, 16) ein mit der Innenseite verbundener Hohlkörper (4) mit einer Öffnung (41) vorgesehen ist, vorzugsweise weist diese Öffnung (41) einen abnehmbaren Deckel auf.

8. Vorrichtung nach Anspruch 7, **dadurch gekennzeichnet, dass** an der Innenseite der ersten und/oder der zweiten Lochplatte (1, 1', 10, 15) Mittel vorgesehen sind, vorzugsweise Armier-Eisen (3, 3', 6, 14), welche dazu eingerichtet sind, die erste und/oder die zweite Lochplatte (1, 1', 10, 15) im Bauteil (A, B) zu verankern.

9. Vorrichtung nach einem der Ansprüche 2 bis 8 **dadurch gekennzeichnet, dass** die erste und die zweite Lochplatte (1, 1', 10, 15) an ihren Aussenseiten eine strukturierte, vorzugsweise eine Oberfläche mit Zähnen aufweisen, wobei bei der Verbindung des ersten Bauteils (A) mit dem zweiten Bauteil (B) die beiden Strukturen formschlüssig ineinandergreifen können.

10. Vorrichtung nach einem der vorangegangenen Ansprüche 1 bis 9, **dadurch gekennzeichnet, dass** das Loch (11, 11', 13, 16) in der ersten und/oder der zweiten Lochplatte (1, 1', 10, 15) und die erste und/oder die zweite Drehscheibe (12, 12', 17, 9) eine Verzahnung aufweisen und ein Formschluss zwischen der Verzahnung des Lochs (11, 11', 13, 16) in der Lochplatte (1, 1', 10, 15) und der Verzahnung der Drehscheibe (12, 12', 17, 9) gebildet ist.

11. Vorrichtung nach Anspruch 1, **dadurch gekennzeichnet, dass** die Vorrichtung eine Gewindehülse (5) umfasst, wobei die Gewindehülse (5) in dem zweiten Bauteil (B) angrenzend an eine Oberfläche dieses zweiten Bauteils (B) verankerbar ist und die Schraube (2, 2', 7) in diese Gewindehülse (5) einschraubbar ist.

12. Vorrichtung nach Anspruch 1, **dadurch gekennzeichnet, dass** die Vorrichtung eine Ankerschiene umfasst, wobei die Ankerschiene in dem zweiten Bauteil (B) angrenzend an einer Oberfläche dieses zweiten Bauteils (B) verankerbar ist und die Schraube (2, 2', 7), vorzugsweise eine Hammerkopfschraube, mit ihrem Kopf in die Ankerschiene einlegbar ist.

13. Vorrichtung nach einem der vorangegangenen Ansprüche 1-11, **dadurch gekennzeichnet, dass** die Vorrichtung einen Abstandshalter umfasst, wobei der Abstandshalter zwischen dem ersten und dem zweiten Bauteil (A, B) anordenbar ist.

14. Verfahren zur Verbindung von zwei Bauteilen mittels einer Vorrichtung nach einem der Ansprüche 1 - 12 in einer gewünschten relativen Ausrichtung, wobei die erste Lochplatte (1, 1', 10) der genannten Vorrichtung in einem der beiden Bauteile (A, B) angrenzend an eine Oberfläche dieses Bauteils verankert und in dem anderen Bauteil eine Gewindehülse (5) oder eine zweite Lochplatte (15) angrenzend an eine Oberfläche dieses Bauteils verankert ist, **gekennzeichnet durch** folgende Schritte:
Ausrichten der beiden Bauteile (A, B) in der gewünschten relativen Ausrichtung aufeinander,
Drehen und/oder Verkippen und/oder Verschwenken der Drehscheibe (12, 12', 9) in einer der beiden Lochplatten (1, 1', 10, 15), bis die Öffnung (111, 11 1', 91) in der Drehscheibe (12, 12', 9) mit der Gewindehülse (5) oder der Ankerschiene oder einem Loch (16) in der Lochplatte (15, 10) fluchtet,
Durchstecken der Schraube (2, 2', 7) durch die Drehscheibe (12, 12',9), angeordnet in der ersten oder der zweiten Lochplatte (1, 1', 10, 15) und Einschrauben der Schraube (2, 2', 7) in die Gewindehülse (5) oder Einlegen eines Kopfes einer Hammerkopfschraube in die Ankerschiene oder Sichern der Schraube (2, 2', 7) mit einer Mutter (19) in einem Loch (16) der ersten oder zweiten Lochplatte (15, 10).

## Claims

1. A device for connecting two components (A, B) in a desired relative alignment, comprising a first perforated plate (1, 1', 10), a first rotary disk (12, 12', 9) and a screw (2, 2', 7), wherein the first perforated plate (1, 1', 10) can be anchored in a first of the two components (A, B) bordering a surface of this component, and is provided with a hole (11, 11', 13), wherein the first rotary disk (12, 12', 9) is rotatably and outwardly held in the hole (11, 11', 13) of the first perforated plate (1, 1', 10), wherein the first rotary disk (12, 12', 9) is provided with an opening (111, 111', 91), and wherein the screw (2, 2', 7) is dimensioned for piercing through the opening (111, 111', 91),
- the opening is an oblong hole (111, 111', 91), and the screw (2, 2', 7) can be displaced along the latter,
wherein
- the first rotary disk (12, 12', 9) can be pivoted relative to the first perforated plate (1, 1', 10) and/or the screw (2, 2', 7) can be pivoted relative to the first rotary disk (12, 12', 9) by up to 10° by means of corresponding spherical collar surfaces,
or
- the first rotary disk (12, 12', 9) can be held in the hole (11, 11', 13) of the first perforated plate (1, 1', 10) and/or the screw (2, 2', 7) can be held relative to the first rotary disk (12, 12', 9), with clearance and tilted by up to 10°, so that components that are not arranged parallel to each other can be aligned relative to each other.

2. The device according to claim 1, **characterized in that** the device comprises a second perforated plate (15) as well as a nut (19), wherein the second perforated plate (1, 1', 10, 15) can be anchored in the second of the two components (A, B) bordering a surface of this second component (A, B), and is provided with a hole (16) for the screw (2, 2', 7) to pierce through, and wherein the first and the second perforated plate (1, 1', 10, 15) can be connected with each other by means of the screw (2, 2', 7) and the nut (19).

3. The device according to claim 2, **characterized in that** a second rotary disk (17) is rotatably and outwardly held in the hole (16) of the second perforated plate (15), wherein the second rotary disk (12, 12', 17, 9) is provided with an opening (20), wherein the screw (2, 2', 7) is dimensioned to also pierce through the second opening (20), the opening is preferably an oblong hole (20), and wherein the screw (2, 2', 7) can be displaced along the latter.

4. The device according to claim 1 or 3, **characterized in that** the first and/or the second rotary disk (12, 12', 17, 9) is form-fittingly held in the hole (11, 11', 13, 16) of the first and/or the second perforated plate (1, 1', 10, 15) by a conical design of the hole (11, 11', 13, 16) and/or the rotary disk (12, 12', 17, 9).

5. The device according to claim 3, **characterized in that** the second rotary disk (17) is held in the hole (16) of the second perforated plate (15) and/or the screw (2, 2', 7) is held relative to the second rotary disk (17) with clearance and can be tilted by up to 10°, preferably by up to 2° - 4°.

6. The device according to claim 3, **characterized in that** the second rotary disk (17) can be pivoted relative to the second perforated plate (15) and/or the screw (2, 2', 7) can be pivoted relative to the second rotary disk (17) by means of corresponding spherical collar surfaces by up to 10°, preferably by up to 2° - 4°.

7. The device according to one of the preceding claims, **characterized in that** a hollow body (4) connected with the interior side is provided with an opening (41) on an interior side of the first and/or the second perforated plate (1, 1', 10, 15) in the area of the hole (11, 11', 13, 16), wherein this opening (41) preferably has a removable cover.

8. The device according to claim 7, **characterized in that** means are provided on the interior side of the first and/or the second perforated plate (1, 1', 10, 15), preferably reinforcing iron (3, 3', 6, 14), which are set up to anchor the first and/or the second perforated plate (1, 1', 10, 15) in the component (A, B).

9. The device according to one of claims 2 to 8, **characterized in that** the exterior sides of the first and the second perforated plate (1, 1', 10, 15) have a structured surface, preferably one with teeth, wherein the two structures can interlock in a form-fitting manner while connecting the first component (A) with the second component (B).

10. The device according to one of the preceding claims 1 to 9, **characterized in that** the hole (11, 11', 13, 16) in the first and/or the second perforated plate (1, 1', 10, 15) and the first and/or the second rotary disk (12, 12', 17, 9) have a tooth system, and a positive connection is formed between the tooth system of the hole (11, 11', 13, 16) in the perforated plate (1, 1', 10, 15) and the tooth system of the rotary disk (12, 12', 17, 9).

11. The device according to claim 1, **characterized in that** the device has a threaded sleeve (5), wherein the threaded sleeve (5) can be anchored in the second component (B) bordering a surface of this second component (B), and the screw (2, 2', 7) can be screwed into this threaded sleeve (5).

12. The device according to claim 1, **characterized in that** the device comprises an anchor rail, wherein the anchor rail can be anchored in the second component (B) bordering a surface of this second component (B), and the screw (2, 2', 7), preferably a hammerhead screw, can be placed with its head in the anchor rail.

13. The device according to one of the preceding claims 1 to 11, **characterized in that** the device has a spacer, wherein the spacer can be arranged between the first and the second component (A, B).

14. A method for connecting two components by means of a device according to one of claims 1 - 12 in a desired relative alignment, wherein the first perforated plate (1, 1', 10) of the mentioned device is anchored in one of the two components (A, B) bordering a surface of this component, and a threaded sleeve (5) or a second perforated plate (15) is anchored in the other component bordering a surface of this component, **characterized by** the following steps:
Aligning the two components (A, B) in the desired relative alignment to each other,
Rotating and/or tilting and/or pivoting the rotary disk (12, 12', 9) in one of the two perforated plates (1, 1', 10, 15) until the opening (111, 111', 91) in the rotary disk (12, 12', 9) aligns with the threaded sleeve (5) or the anchor rail or a hole (16) in the perforated plate (15, 10),
Piercing the screw (2, 2', 7) through the rotary disk (12, 12', 9) arranged in the first or the second perforated plate (1, 1', 10, 15), and screwing the screw (2, 2', 7) into the threaded sleeve (5) or placing a head of a hammerhead screw into the anchor rail or securing the screw (2, 2', 7) with a nut (19) in a hole (16) of the first or second perforated plate (15, 10).

## Revendications

1. Dispositif, destiné à assembler deux éléments constitutifs (A, B) selon une orientation relative souhaitée, comprenant une première plaque perforée (1, 1', 10), un premier disque rotatif (12, 12', 9) et une vis (2, 2', 7), la première plaque perforée (1, 1', 10) étant susceptible d'être ancrée dans un premier des deux éléments constitutifs (A, B), en étant adjacente à une surface dudit élément constitutif et étant munie d'un trou (11, 11', 13), le premier disque rotatif (12, 12', 9) étant maintenu de manière rotative et en direction de l'extérieur dans le trou (11, 11', 13) de la première plaque perforée (1, 1', 10), le premier disque rotatif (12, 12', 9) étant muni d'un orifice (111, 111', 91), et la vis (2, 2', 7) étant dimensionnée pour être enfilée à travers l'orifice (111, 111', 91),
- l'orifice étant un trou oblong (111, 111', 91) et la vis (2, 2', 7) étant déplaçable le long de celui-ci,
- le premier disque rotatif (12, 12', 9) étant susceptible de pivoter par rapport à la première plaque perforée (1, 1', 10) et / ou la vis (2, 2', 7) étant susceptible de pivoter de jusqu'à 10° par rapport au premier disque rotatif (12, 12', 9), au moyen de surfaces à portée sphérique correspondantes,
ou
- le premier disque rotatif (12, 12', 9) étant maintenu dans le trou (11, 11', 13) de la première plaque perforée (1, 1', 10) et / ou la vis (2, 2', 7) étant maintenue par rapport au disque rotatif (12, 12', 9) avec un jeu et étant susceptible de basculer de jusqu'à 10°, de telle sorte que des éléments constitutifs qui ne sont pas placés à la parallèle les uns des autres puissent être orientés les uns par rapport aux autres.

2. Dispositif selon la revendication 1, **caractérisé en ce que** le dispositif comprend une deuxième plaque perforée (15), ainsi qu'un écrou (19), la deuxième plaque perforée (1, 1', 10, 15) étant susceptible d'être ancrée dans le deuxième des éléments constitutifs (A, B), en étant adjacente à une surface dudit deuxième élément constitutif (A, B) et étant munie d'un trou (16), destiné à enfiler la vis (2, 2', 7) et la première et la deuxième plaques perforées (1, 1', 10, 15) étant susceptible d'être assemblées l'une avec l'autre au moyen de la vis (2, 2', 7) et de l'écrou (19).

3. Dispositif selon la revendication 2, **caractérisé en ce que** dans le trou (16) de la deuxième plaque perforée (15), un deuxième disque rotatif (17) est maintenu de manière rotative et en direction de l'extérieur, le deuxième disque rotatif (12, 12', 17, 9) étant muni d'un orifice (20), la vis (2, 2', 7) étant dimensionnée pour être enfilée également à travers le deuxième orifice (20), de préférence, l'orifice étant un trou oblong (20) et la vis (2, 2', 7) étant déplaçable le long de celui-ci.

4. Dispositif selon la revendication 1 ou 3, **caractérisé en ce que** le premier et / ou le deuxième disque rotatif (12, 12', 17, 9) est maintenu par complémentarité de forme dans le trou (11, 11', 13, 16) de la première et / ou de la deuxième plaque perforée (1, 1', 10, 15) par une conception conique du trou (11, 11', 13, 16) et / ou du disque rotatif (12, 12', 17, 9).

5. Dispositif selon la revendication 3, **caractérisé en ce que** le deuxième disque rotatif (17) est maintenu dans le trou (16) de la deuxième plaque perforée (15) et / ou **en ce que** la vis (2, 2', 7) est maintenue par rapport au deuxième disque rotatif (17) avec un jeu et est susceptible de basculer de jusqu'à 10°, de préférence de jusqu'à de 2° à 4°.

6. Dispositif selon la revendication 3, **caractérisé en ce que** le deuxième disque rotatif (17) est susceptible de pivoter par rapport à la deuxième plaque perforée (15) et / ou **en ce que** la vis (2, 2', 7) est susceptible de pivoter de jusqu'à 10°, de préférence de jusqu'à de 2° à 4°, par rapport au deuxième disque rotatif (17), au moyen de surfaces à portée sphérique correspondantes.

7. Dispositif selon l'une quelconque des revendications précédentes, **caractérisé en ce que** sur une face intérieure de la première et / ou de la deuxième plaque perforée (1, 1', 10, 15) dans la zone du trou (11, 11', 13, 16), il est prévu un corps creux (4) assemblé avec la face intérieure, pourvu d'un orifice (41), ledit orifice (41) comporte de préférence un couvercle amovible.

8. Dispositif selon la revendication 7, **caractérisé en ce que** sur la face intérieure de la première et / ou de la deuxième plaque perforée (1, 1', 10, 15) sont prévus des moyens, de préférence des fers d'armature (3, 3', 6, 14), lesquels sont aménagés pour ancrer la première et / ou la deuxième plaque perforée (1, 1', 10, 15) dans l'élément constitutif (A, B).

9. Dispositif selon l'une quelconque des revendications 2 à 8, **caractérisé en ce que** la première et la deuxième plaques perforées (1, 1', 10, 15) comportant sur leurs faces extérieure une surface structurée, pourvue de préférence de dents, lors de l'assemblage du premier élément constitutif (A) avec le deuxième élément constitutif (B), les deux structures étant susceptibles de s'engrener par complémentarité de forme.

10. Dispositif selon l'une quelconque des revendications précédentes 1 à 9, **caractérisé en ce que** le trou (11, 11', 13, 16) dans la première et / ou dans la deuxième plaque perforée (1, 1', 10, 15) et le premier et / ou le deuxième disque rotatif (12, 12', 17, 9) comportent une denture et une complémentarité de forme est créée entre la denture du trou (11, 11', 13, 16) dans la plaque perforée (1, 1', 10, 15) et la denture du disque rotatif (12, 12', 17, 9).

11. Dispositif selon la revendication 1, **caractérisé en ce que** le dispositif comprend une douille taraudée (5), la douille taraudée (5) étant susceptible d'être ancrée dans le deuxième élément constitutif (B), en étant adjacente à une surface dudit deuxième élément constitutif (B) et **en ce que** la vis (2, 2', 7) est susceptible d'être vissée dans ladite douille taraudée (5) .

12. Dispositif selon la revendication 1, **caractérisé en ce que** le dispositif comprend un rail d'ancrage, le rail d'ancrage étant susceptible d'être ancré dans le deuxième élément constitutif (B), en étant adjacent à une surface dudit deuxième élément constitutif (B) et **en ce que** la vis (2, 2', 7), de préférence une vis à tête marteau est insérable par sa tête dans le rail d'ancrage.

13. Dispositif selon l'une quelconque des revendications précédentes 1 à 11, **caractérisé en ce que** le dispositif comprend un espaceur, l'espaceur étant susceptible d'être placé entre le premier et le deuxième élément constitutif (A, B).

14. Procédé, destiné à assembler deux éléments constitutifs au moyen d'un dispositif selon l'une quelconque des revendications 1 à 12 selon une orientation relative souhaitée, la première plaque perforée (1, 1', 10) dudit dispositif étant ancrée dans l'un des deux éléments constitutifs (A, B) en étant adjacente à une surface dudit élément constitutif et dans l'autre élément constitutif étant ancrée une douille taraudée (5) ou une deuxième plaque perforée (15), en étant adjacente à une surface dudit élément constitutif, **caractérisé par** les étapes suivantes, comprenant:
orienter l'un par rapport à l'autre les deux éléments constitutifs (A, B) selon l'orientation relative souhaitée,
faire tourner et / ou faire basculer et / ou faire pivoter le disque rotatif (12, 12', 9) dans l'une des deux plaques perforées (1, 1', 10, 15), jusqu'à ce que l'orifice (111, 111', 91) dans le disque rotatif (12, 12', 9) soit aligné sur la douille taraudée (5) ou sur le rail d'ancrage ou sur un trou (16) dans la plaque perforée (15, 10),
enfiler la vis (2, 2', 7) à travers le disque rotatif (12, 12', 9), placé dans la première ou dans la deuxième plaque perforée (1, 1', 10, 15) et visser la vis (2, 2', 7) dans la douille taraudée (5) ou insérer une tête d'une vis à tête marteau dans le rail d'ancrage ou bloquer la vis (2, 2', 7) avec un écrou (19) dans un trou (16) de la première ou de la deuxième plaque perforée (15, 10).
